# EUROPEAN PATENT APPLICATION

(11) **EP 3 269 563 A1**
(43) Date of publication of application: **17.01.2018**
(21) Application number: 16761541.8
(22) Date of filing: 29.02.2016
(51) Int. Cl.: B60C 9/18

(54) **HEAVY DUTY PNEUMATIC TIRE**

(30) Priority: 09.03.2015 JP 2015045781
(71) Applicant: Bridgestone Corporation, Tokyo 104-8340 (JP)
(72) Inventor: ICHIHARA, Eiji, Tokyo 104-8340 (JP)
(74) Representative: Oxley, Robin John George
(86) International application number: PCT/JP2016/055980
(87) International publication number: WO 2016/143571

(57) **Abstract**

A belt portion (7) of a heavy duty pneumatic tire (1) includes a cross-laminated body (7A) in which extension directions of the cords in the belt layers next to each other in a tire radial direction (R) intersect each other, and a parallel-laminated body (7B) in which extension directions of the cords in the belt layers next to each other in the tire radial direction (R) are substantially parallel to each other. In addition, the parallel-laminated body (7B) is provided in the belt portion (7) in a way that satisfies a relationship expressed with i ≥ n/2 where n denotes a total number of belt layers (1B to 6B) included in the belt portion (7), and i denotes the number of a belt layer (4B), which is located on the inner side in the tire radial direction (R) among the belt layers (4B,5B) of the parallel-laminated body (7B), when the belt layers (1B to 6B) included in the belt portion (7) are counted from an inner side in the tire radial direction (R).

## Description

### [TECHNICAL FIELD]

The present invention relates to a heavy duty pneumatic tire.

### [BACKGROUND ART]

A heavy duty pneumatic tire applicable to heavy duty vehicles such as trucks, buses and construction vehicles is used under conditions of high air pressure and heavy load. For this reason, for the purpose of reinforcing the heavy duty pneumatic tire, the tread rubber of the tread portion is provided with the belt portion which includes multiple (for example, four or more) belt layers stacked one on another.

In such a case where the tread rubber of the tread portion is provided with the belt portion which includes multiple (for example, four or more) belt layers stacked one on another, there is likelihood that the belt layers separate from the rubber near the belt layers. It is desirable, therefore, to improve the belt separation resistance performance.

A possible measure to improve the belt separation resistance performance is to decrease the cord diameters of the cords included in the belt layers. The decrease in the cord diameters, however, worsens the cut resistance performance of the heavy duty pneumatic tire.

With this taken into consideration, a technique disclosed in Patent Literature 1 has been proposed. Patent Literature 1 aims at achieving both the cut resistance performance and the belt separation resistance performance by: making each two belt layers next to each other incline to the tire equatorial plane in their respective directions which are opposite to each other; and appropriately setting the cord diameters of the cords included in the belt layers.

### [CITATION LIST]

### [PATENT LITERATURE]

Patent Literature 1: Japanese Unexamined Patent Application Publication No. 2009-234297

### [SUMMARY OF INVENTION]

### [TECHNICAL PROBLEM]

The conventional technique, however, has difficulty in further improving the achievement of both the cut resistance performance and the belt separation resistance performance as long as the conventional technique relies on the change in cord diameter only.

In view of this, an object of the present invention is to obtain a heavy duty pneumatic tire capable of further improving the achievement of both the cut resistance performance and the belt separation resistance performance.

### [SOLUTION TO PROBLEM]

A heavy duty pneumatic tire of the present invention includes: at least one carcass which toroidally extends between bead cores embedded respectively in a pair of bead portions; and a belt portion which is arranged outside the carcass in a tire radial direction, and which includes at least five belt layers stacked one on another in the tire radial direction, each belt layer made by covering multiple cords with rubber. In addition, the belt portion includes a cross-laminated body in which extension directions of the cords in the belt layers next to each other in the tire radial direction intersect each other, and a parallel-laminated body in which extension directions of the cords in the belt layers next to each other in the tire radial direction are substantially parallel to each other. Moreover, the parallel-laminated body is provided in the belt portion in a way that satisfies a relationship expressed with i ≥ n/2 where n denotes a total number of belt layers included in the belt portion, and i denotes the number of a belt layer, which is located on the inner side in the tire radial direction among the belt layers of the parallel-laminated body, when the belt layers included in the belt portion are counted from an inner side in the tire radial direction.

### [ADVANTAGEOUS EFFECT OF INVENTION]

The present invention makes it possible to obtain the heavy duty pneumatic tire capable of further improving the achievement of both the cut resistance performance and the belt separation resistance performance.

### [BRIEF DESCRIPTION OF DRAWINGS]

[Fig. 1] Fig. 1 is a perspective cutaway diagram illustrating a half of a tread portion of a heavy duty pneumatic tire of a first embodiment of the present invention.
[Fig. 2] Fig. 2 is a width-direction cross-sectional diagram illustrating a part of the half of the tread portion of the heavy duty pneumatic tire of the first embodiment of the present invention.
[Fig. 3] Fig. 3 is a perspective cutaway diagram illustrating a half of a tread portion of a heavy duty pneumatic tire of a second embodiment of the present invention.
[Fig. 4] Fig. 4 is a perspective cutaway diagram illustrating a half of a tread portion of a heavy duty pneumatic tire of a third embodiment of the present invention.
[Fig. 5] Fig. 5 is a width-direction cross-sectional diagram illustrating a part of the half of the tread portion of the heavy duty pneumatic tire of the third embodiment of the present invention.

### [DESCRIPTION OF EMBODIMENTS]

Referring to the drawings, detailed descriptions will be provided for embodiments of the present invention. Incidentally, the same components are included in the following multiple embodiments. The same components are denoted by the same reference signs, and duplicated descriptions are omitted.

Furthermore, a heavy duty pneumatic tire has a structure which is symmetrical with respect to a tire equatorial plane CL. With this taken into consideration, each drawing illustrates only the shape of the left half of the heavy duty pneumatic tire, and omits the shape of the right half of the heavy duty pneumatic tire. For this reason, the following descriptions will be provided based on the shape of the left half of the heavy duty pneumatic tire. Incidentally, the unillustrated right half of the heavy duty pneumatic tire has the same structure as the left half of the heavy duty pneumatic tire, although descriptions for the structure of the right half of the heavy duty pneumatic tire will be omitted below.

### (First Embodiment)

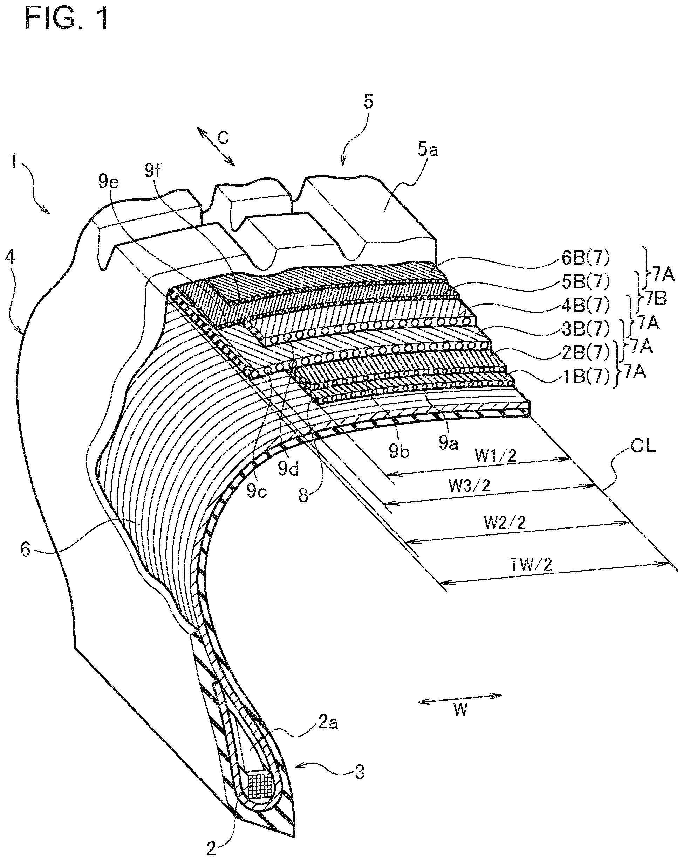

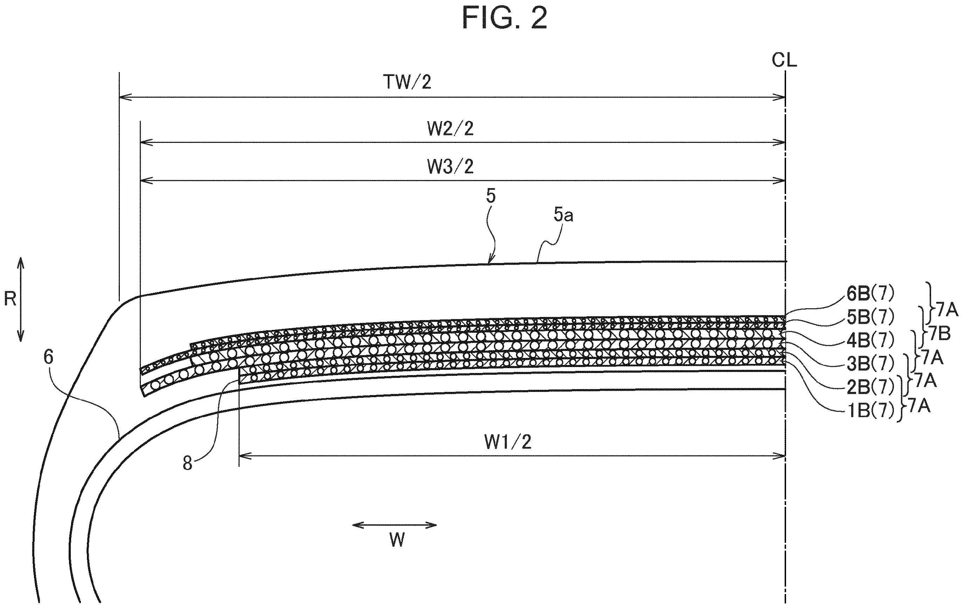

Fig. 1 is a perspective cutaway diagram of the heavy duty pneumatic tire of the embodiment. Fig. 2 is a width-direction cross-sectional diagram of a part of a half of the tread portion of the heavy duty pneumatic tire of the embodiment. In this respect, the width-direction cross-sectional diagram of the heavy duty pneumatic tire 1 means a cross-sectional diagram of the heavy duty pneumatic tire 1 taken along a plane extending in the tire width direction W and the tire radial direction R, that is to say, a plane orthogonal to the tire circumferential direction C.

The heavy duty pneumatic tire 1 of the embodiment is used for heavy duty vehicle such as trucks, buses, and construction vehicles. As illustrated in Fig. 1, the heavy duty pneumatic tire 1 includes: a bead portion 3; a sidewall portion 4 continuing from the bead portion 3; and a tread portion 5 continuing from the sidewall portion 4.

It should be noted that: the tire 1 is provided with a pair of bead portions 3; and the pair of bead portions 3 are provided respectively to the two sides of the tire 1 in the tire width direction W with the tire equatorial plane CL interposed in between. Furthermore, a pair of sidewall portions 4 are provided continuing from the pair of bead portions 3, respectively; and the pair of sidewall portions 4 are also provided respectively to the two sides of the tire 1 in the tire width direction W with the tire equatorial plane CL interposed in between. Moreover, the tread portion 5 is provided extending between the pair of sidewall portions 4.

The heavy duty pneumatic tire 1 further includes at least one carcass 6 which toroidally extends between bead cores 2 respectively embedded in the pair of bead portions 3. The carcass 6 reinforces the bead portions 3, the sidewall portions 4 and the tread portion 5. The carcass 6 forms the skeleton of the heavy duty pneumatic tire 1.

It should be noted that an inner liner (not illustrated) may be provided on the inner surface of the carcass 6 in order to prevent air leakage.

This heavy duty pneumatic tire 1 is mounted on a rim (normal rim), although not illustrated.

Note that the "normal rim" means a standard rim in an applicable size defined in the JATMA (Japan Automobile Tyre Manufactures Association) Yearbook. Outside Japan, the term "normal rim" means a standard rim in an applicable size specified in standards to be described below.

The standards are defined by the industrial standards valid in each country where the tire is manufactured and used. For example, the standards in the U.S.A. are defined in "the Yearbook published by The Tire and Rim Association Inc." The standards in Europe are defined in "the European Tyre and Rim Technical Organization Standards Manual."

The bead portions 3 are provided in the form of a ring continuing in the tire circumferential direction C, and are covered with rubber. The bead portions 3 are members that fix the heavy duty pneumatic tire 1 to the rim. Among the members forming the heavy duty pneumatic tire 1, the bead portions 3 are provided on the innermost side of the heavy duty pneumatic tire 1 in the tire radial direction R.

In this embodiment, each bead portion 3 includes: the bead core 2 formed by bundling high-carbon steel wires up; and a bead filler 2a made of hard rubber.

The sidewall portions 4 are provided continuing in the tire circumferential direction C, and form the respective side portions of the heavy duty pneumatic tire 1. The sidewall portions 4 are made of sidewall rubber.

Furthermore, out of the members forming the heavy duty pneumatic tire 1, the sidewall portions 4 are provided outward of the bead portions 3 in the tire radial direction R.

The tread portion 5 is provided continuing in the tire circumferential direction C. The tread portion 5 is one of the members forming the heavy duty pneumatic tire 1, which forms a tread contact surface 5a whose outer circumferential surface contacts the road surface. The tread portion 5 is made of tread rubber. Furthermore, the tread portion 5 includes a predetermined tread pattern formed thereon.

In this respect, the tread contact surface 5a is a surface of the heavy duty pneumatic tire 1 which contacts the road surface when the heavy duty pneumatic tire 1 is mounted on the normal rim with the normal inner pressure and the normal load applied to the heavy duty pneumatic tire 1. The width of the tread contact surface 5a in the tire width direction W under this condition is a contact width TW of the tread.

Note that the "normal inner pressure" is an air pressure defined using the measurement method for a tire which is specified in the JATMA (Japan Automobile Tyre Manufactures Association) Yearbook. Outside Japan, the "normal inner pressure" is an air pressure which corresponds to an air pressure in the tire dimension measurement specified in the above-mentioned standards.

Furthermore, the "normal load" is a load corresponding to the maximum load rating for a single wheel which is specified in the JATMA (Japan Automobile Tyre Manufactures Association) Yearbook. Outside Japan, the "normal load" is a maximum load (maximum load rating) for a single tire in an applicable size which is specified in in the above-mentioned standards.

In addition, a belt portion 7 is provided on outside the carcass 6 in the tire radial direction R. The belt portion 7 includes at least five belt layers which are stacked one on another in the tire radial direction R, and each belt layer is made by covering multiple cords with rubber.

The belt portion 7 functions as a hoop for partially restraining the carcass 6 from being deformed by bulging out when an inner pressure is applied to the heavy duty pneumatic tire 1. The belt portion 7 further functions to inhibit deformation of the heavy duty pneumatic tire 1 due to a change in load working on the heavy duty pneumatic tire 1 and due to rotation of the heavy duty pneumatic tire 1, as well as to ease impact inputted from the road surface by absorbing the impact. Moreover, the belt portion 7 is embedded in the tread rubber of the tread portion 5, and extending therein in the tire circumferential direction C.

In this embodiment, the belt portion 7 is formed by stacking six belt layers, namely, a first belt layer 1B, a second belt layer 2B, a third belt layer 3B, a fourth belt layer 4B, a fifth belt layer 5B and a sixth belt layer 6B, in this order from the inside to the outside in the tire radial direction R.

Specifically, in this embodiment, among the multiple belt layers, the first belt layer 1B is placed on the innermost side of the tire in the tire radial direction R. Furthermore, the second belt layer 2B is placed on the outer side of the first belt layer 1B in the tire radial direction R. The third belt layer 3B is placed on the outer side of the second belt layer 2B in the tire radial direction R. The fourth belt layer 4B is placed on the outer side of the third belt layer 3B in the tire radial direction R. The fifth belt layer 5B is placed on the outer side of the fourth belt layer 4B in the tire radial direction R. Among the multiple belt layers, the sixth belt layer 6B is placed on the outermost side of the tire in the tire radial direction R.

It should be noted that cords 9a, 9b, 9c, 9d, 9e, 9f are embedded in the belt layers 1B, 2B, 3B, 4B, 5B, 6B, respectively. Specifically, the layer-shaped belt layers 1B, 2B, 3B, 4B, 5B, 6B are formed by covering multiple cords 9a, multiple cords 9b, multiple cords 9c, multiple cords 9d, multiple cords 9e and multiple cords 9f with rubber, respectively.

In addition, the cord 9a in the first belt layer 1B and the cord 9b in the second belt layer 2B are each made of a high tensile strength steel cord which extends while inclining to the tire equatorial plane CL. The high tensile strength steel cord is, for example, a steel cord with a tensile strength of 1200 N/mm² as its mechanical strength.

Furthermore, the cord 9c in the third belt layer 3B and the cord 9d in the fourth belt layer 4B are each made of a rubber-clad high tensile strength steel cord which extends while inclining to the tire equatorial plane CL.

Moreover, the cord 9e in the fifth belt layer 5B and the cord 9f in the sixth belt layer 6B are each made of a rubber-clad high elongation steel cord which extends while inclining to the tire equatorial plane CL. The high elongation steel cord is a steel cord with a high elongation property which allows it to elongate by 5 to 8% or more of its total length before it breaks.

In this case, the inclination angles of the cord 9c in the third belt layer 3B and the cord 9d in the fourth belt layer 4B to the tire equatorial plane CL are set larger than the inclination angles of the cord 9a in the first belt layer 1B and the cord 9b in the second belt layer 2B to the tire equatorial plane CL.

In other words, the inclination angles of the cord 9a in the first belt layer 1B and the cord 9b in the second belt layer 2B to the tire equatorial plane CL are set smaller.

Since as discussed above, the inclination angles of the cords 9a, 9b made of the high tensile strength steel cord to the tire equatorial plane CL are set smaller, the first belt layer 1B and the second belt layer 2B are capable of bearing tension in the tire circumferential direction C. Thus, the first belt layer 1B and the second belt layer 2B inhibit the diameter growth of the tread portion 5 while inner pressure is being filled into the tire, while the tire is rotating with load on it, or in other occasions. Consequently, the tire shape can be maintained.

Furthermore, since the cords 9a, 9b made of the high elongation steel cord are embedded in the first belt layer 1B and the second belt layer 2B, the first belt layer 1B and the second belt layer 2B are capable of inhibiting the third belt layer 3B and the fourth belt layer 4B from being deformed when the tire runs over a protrusion such as a stone while the tire is rotating with load on it. Since the deformation of the third belt layer 3B and the fourth belt layer 4B is inhibited by the first belt layer 1B and the second belt layer 2B, breaking and damages of the third belt layer 3B and the fourth belt layer 4B can be prevented, and the durability of the belt portion 7 can be accordingly improved.

As discussed above, the first belt layer 1B and the second belt layer 2B function as the belt of the air-filled heavy duty pneumatic tire 1, and function to improve the durability of the belt portion 7.

In addition, since the inclination angles of the cord 9c in the third belt layer 3B and the cord 9d in the fourth belt layer 4B to the tire equatorial plane CL are set larger, the third belt layer 3B and the fourth belt layer 4B can inhibit shear deformation of the heavy duty pneumatic tire 1.

Moreover, the inclusion of the third belt layer 3B and the fourth belt layer 4B makes it possible for the tire to resist an input from the road surface when the tire runs over a protrusion such as a stone when the tire is rotating with load on it. Since as discussed above, the heavy duty pneumatic tire 1 is designed to be capable of resisting an input from the road surface when the heavy duty pneumatic tire 1 runs over a protrusion such as a stone, the heavy duty pneumatic tire 1 can be inhibited from being broken by the input from the road surface when the heavy duty pneumatic tire 1 runs over the protrusion such as a stone. Thus, the durability of the heavy duty pneumatic tire 1 can be improved.

As discussed above, the third belt layer 3B and the fourth belt layer 4B function to inhibit the shear deformation of the heavy duty pneumatic tire 1, and function to improve the durability of the heavy duty pneumatic tire 1.

Meanwhile, as discussed above, the easy-to-elongate cords 9e, 9f are embedded in the fifth belt layer 5B and the sixth belt layer 6B. This allows the fifth belt layer 5B and the sixth belt layer 6B to change their shapes according to the input from a protrusion such as a stone when the tire runs over the protrusion while the tire is rotating with load on it, and concurrently to secure sufficient resistance against the deformation. This accordingly makes it possible to inhibit excessive deformation of the third belt layer 3B and the fourth belt layer 4B, and to prevent breaking and damages of the cords 9c, 9d in the third belt layer 3B and the fourth belt layer 4B which would occur if the third belt layer 3B and the fourth belt layer 4B were excessively deformed. In this way, the fifth belt layer 5B and the sixth belt layer 6B function as protection belt layers. The inclusion of the fifth belt layer 5B and the sixth belt layer 6B like this in the belt portion 7 makes it possible to further improve the durability of the heavy duty pneumatic tire 1.

It should be noted that in this embodiment, the cord diameter of at least one cord is different from those of the other cords.

In other words, a cord which is different in cord diameter from the other cords is embedded in at least one of the first to sixth belt layers 1B to 6B.

In this way, in this embodiment, the belt portion 7 includes the multiple belt layers with different cord diameters.

Specifically, three types of cords which are different in cord diameter from each other are used to make the first to sixth belt layers 1B to 6B.

First of all, the cords 9c, 9d with the largest cord diameters are embedded in the third belt layer 3B and the fourth belt layer 4B, respectively. Thus, the third belt layer 3B and the fourth belt layer 4B are the thickest belt layers.

Furthermore, the cords 9e, 9f with the smallest cord diameter are embedded in the fifth belt layer 5B and the sixth belt layer 6B. Thus, the fifth belt layer 5B and the sixth belt layer 6B are the thinnest belt layers.

Moreover, the cords 9a, 9b with the medium cord diameter are embedded in the first belt layer 1B and the second belt layer 2B. Thus, the first belt layer 1B and the second belt layer 2B are the medium thick belt layers.

This difference in cord diameter among the cords used to make the belt layers makes it possible for the belt layers to effectively stop various protrusions (such as stones), whether large or small, from piercing into the heavy duty pneumatic tire 1 when the heavy duty pneumatic tire 1 runs over the protrusions.

For example, since the cords 9e, 9f with the smallest cord diameter are embedded in the fifth belt layer 5B and the sixth belt layer 6B, the dense embedding of the cords 9e, 9f in the respective belt layers makes it possible to make the inter-cord space narrow. The belt layers in which the inter-cord space is narrow like this are capable of more effectively stopping smaller protrusions from piercing into the tire.

Meanwhile, the belt layers with the larger cord diameter are capable of more effectively stopping larger protrusions from piercing into the tire.

It should be noted that the number of different cord diameters is not limited to three, and may be two, otherwise four or more.

Besides, in this embodiment, the width W1 of the first belt layer 1B and the second belt layer 2B in the tire width direction W is smaller than the width W2 of the third belt layer 3B in the tire width direction W.

Since as discussed above, the width W1 of the first belt layer 1B and the second belt layer 2B in the tire width direction W is smaller than the width W2 of the third belt layer 3B in the width direction W, shear strain which occurs while the tire is rotating with load on it can be reduced. The reduction in the shear strain which occurs while the tire is rotating with load on it makes it possible to inhibit end portions 8 of the first belt layer 1B and the second belt layer 2B in the tire width direction W from separating from rubber near the end portions 8. Thus, the durability of the heavy duty pneumatic tire 1 can be improved.

Meanwhile, in the heavy duty pneumatic tire 1 like this, the cord diameter of the cords 9a, 9b of the first belt layer 1B and the second belt layer 2B is preferably within a range of 65% to 95%, and more preferably within a range of 70% to 90%, of the cord diameter of the cords 9c, 9d of the third belt layer 3B and the fourth belt layer 4B.

In a case where the cord diameter of the cords 9a, 9b of the first belt layer 1B and the second belt layer 2B is smaller than 65% of the cord diameter of the cords 9c, 9d of the third belt layer 3B and the fourth belt layer 4B, the rigidity of the first belt layer 1B and the second belt layer 2B is insufficient. This makes the cords 9a, 9b become easy to be broken and damaged due to an input from the road surface such as a stone, and accordingly decreases the durability of the first belt layer 1B and the second belt layer 2B.

On the other hand, in a case where the cord diameter of the cords 9a, 9b of the first belt layer 1B and the second belt layer 2B is larger than 95% of the cord diameter of the cords 9c, 9d of the third belt layer 3B and the fourth belt layer 4B, the cord diameter of the cords 9a, 9b of the first belt layer 1B and the second belt layer 2B is too large. This makes the tire-width direction ends 8 of the first belt layer 1B and the second belt layer 2B more likely to separate from the rubber near the tire-width direction ends 8.

For these reasons, it is preferable that the cord diameter of the cords 9a, 9b of the first belt layer 1B and the second belt layer 2B be set at a value within the range of 65% to 95% of the cord diameter of the cords 9c, 9d of the third belt layer 3B and the fourth belt layer 4B. Such a cord diameter makes it possible to achieve both performance of resistance against the separation between the tire-width direction ends 8 of the first and second belt layers 1B, 2B and the rubber near the tire-width direction ends 8 as well as the durability of the first belt layer 1B and the second belt layer 2B. Thus, the durability of the heavy duty pneumatic tire 1 can be improved more.

Meanwhile, the breaking strength of the first belt layer 1B and the second belt layer 2B is preferably within a range of 60% to 110%, and more preferably within a range 60% to 90%, of the breaking strength of the third belt layer 3B and the fourth belt layer 4B.

In a case where the breaking strength of the first belt layer 1B and the second belt layer 2B is less than 60% of the breaking strength of the third belt layer 3B and the fourth belt layer 4B, the breaking strength of the first belt layer 1B and the second belt layer 2B is insufficient. The insufficiency of the rigidity of the first belt layer 1B and the second belt layer 2B makes the cords 9a, 9b of the first belt layer 1B and the second belt layer 2B more likely to be broken and damaged by an input from a protrusion such as a stone when the tire runs over the protrusion while the tire is rotating with load on it, even if the cords 9c, 9d of the third belt layer 3B and the fourth belt layer 4B are not broken or damaged by the input from the protrusion.

On the other hand, in case where the breaking strength of the first belt layer 1B and the second belt layer 2B is greater than 110% of the breaking strength of the third belt layer 3B and the fourth belt layer 4B, the breaking strength of the first belt layer 1B and the second belt layer 2B is too large. The too large breaking strength of the first belt layer 1B and the second belt layer 2B makes it possible to effectively inhibit the cords 9a, 9b of the first belt layer 1B and the second belt layer 2B from being broken and damaged by an input from a protrusion when the tire runs over the protrusion while the tire is rotating with load on it. However, the too large breaking strength of the first belt layer 1B and the second belt layer 2B allows excessive stress to concentrate on the tire-width direction ends 8 of the first belt layer 1B and the second belt layer 2B when the first belt layer 1B and the second belt layer 2B undergo shear deformation. This raises likelihood that: the tire-width direction ends 8 of the first belt layer 1B and the second belt layer 2B separate from the rubber near the tire-width direction ends 8; and the durability of the heavy duty pneumatic tire decreases.

For these reasons, it is preferable that the breaking strength of the first belt layer 1B and the second belt layer 2B be within a range of 60% to 110% of the breaking strength of the third belt layer 3B and the fourth belt layer 4B. Such breaking strength makes it possible to achieve both performance of resistance against the separation between the tire-width direction ends 8 of the first belt layer 1B and the second belt layer 2B as well as the rubber near the tire-width direction ends 8 as well as the durability of the first belt layer 1B and the second belt layer 2B. Thus, the durability of the heavy duty pneumatic tire 1 can be improved more.

Furthermore, the cords 9a, 9b included in the first belt layer 1B and the second belt layer 2B incline to the tire equatorial plane CL at an angle, preferably within a range of 4° to 10°, and more preferably within a range of 4° to 7°.

In a case where the cords 9a, 9b included in the first belt layer 1B and the second belt layer 2B incline to the tire equatorial plane CL at an angle less than 4°, the angle of inclination of the cords 9a, 9b to the tire equatorial plane CL is too small. The too small inclination angle makes the shear strain excessively large while the tire is rotating with load on it, although the first belt layer 1B and the second belt layer 2B are capable of: sufficiently bearing the tension in the tire circumferential direction C; thereby inhibiting the diameter growth of the tread portion 5; and accordingly maintaining the tire shape. The too large shear strain which occurs while the tire is rotating with load on it allows excessive stress to concentrate on the tire-width direction ends 8 of the first belt layer 1B and the second belt layer 2B. This raises likelihood that: the tire-width direction ends 8 of the first belt layer 1B and the second belt layer 2B separate from the rubber near the tire-width direction ends 8; and the durability of the heavy duty pneumatic tire 1 decreases.

On the other hand, in a case where the cords 9a, 9b included in the first belt layer 1B and the second belt layer 2B incline to the tire equatorial plane CL at an angle greater than 10°, the angle of inclination of the cords 9a, 9b to the tire equatorial plane CL is too large. The too large inclination angle raises likelihood that the first belt layer 1B and the second belt layer 2B are incapable of sufficiently bearing the tension in the tire circumferential direction C, and thus allows excessive diameter growth of the tread portion 5, and accordingly the tire shape cannot be maintained.

For these reasons, it is preferable that the cords 9a, 9b included in the first belt layer 1B and the second belt layer 2B incline to the tire equatorial plane CL at an angle within the range of 4° to 10°. Such an inclination angle makes it possible to improve the durability of the heavy duty pneumatic tire 1 more while maintaining the tire shape.

Moreover, the width W1 of the first belt layer 1B and the second belt layer 2B in the tire width direction W is preferably within a range of 34% to 63% of the contact width TW, and more preferably within a range of 41 to 56% of the contact width TW.

In a case where the width W1 of the first belt layer 1B and the second belt layer 2B in the tire width direction W is less than 34% of the contact width TW, an area where the first belt layer 1B and the second belt layer 2B are placed is too small, and a range in which the first belt layer 1B and the second belt layer 2B can bear the tension in the tire circumferential direction C is limited too much. The too much limited range in which the first belt layer 1B and the second belt layer 2B can bear the tension in the tire circumferential direction C raises likelihood that: an area of the tread portion which cannot inhibit the diameter growth of the tread portion 5 is too large; and accordingly, the tire shape cannot be maintained.

On the other hand, in a case where the width W1 of the first belt layer 1B and the second belt layer 2B in the tire width direction W is greater than 63% of the contact width TW, the shear strain in the first belt layer 1B and the second belt layer 2B is too large while the tire is rotating with load on it. The too large shear strain in the first belt layer 1B and the second belt layer 2B while the tire is rotating with load on it allows excessive stress to concentrate on the tire-width direction ends 8 of the first belt layer 1B and the second belt layer 2B. This raises likelihood that: the tire-width direction ends 8 of the first belt layer 1B and the second belt layer 2B separate from the rubber near the tire-width direction ends 8; and the durability of the heavy duty pneumatic tire decreases.

For these reasons, it is preferable that the width W1 of the first belt layer 1B and the second belt layer 2B in the tire width direction W be within the range of 34% to 63% of the contact width TW. Such a width makes it possible to improve the durability of the heavy duty pneumatic tire 1 more while maintaining the tire shape.

In addition, it is preferable that the cords 9c, 9d included in the third belt layer 3B and the fourth belt layer 4B incline to the tire equatorial plane CL at an angle within a range of 18° to 35°.

In a case where the cords 9c, 9d included in the third belt layer 3B and the fourth belt layer 4B incline to the tire equatorial plane CL at an angle less than 18°, the angle of inclination of the cords 9c, 9d to the tire equatorial plane CL is too small. The too small inclination angle shifts what bear the stress while the tire is rotating with load on it to the first belt layer 1B and the second belt layer 2B, and allows excessive stress to concentrate on the tire-width direction ends 8 of the first belt layer 1B and the second belt layer 2B. This raises likelihood that: the tire-width direction ends 8 separate from the rubber near the tire-width direction ends 8; and the durability of the heavy duty pneumatic tire 1 decreases.

On the other hand, in a case where the cords 9c, 9d included in the third belt layer 3B and the fourth belt layer 4B incline to the tire equatorial plane CL at an angle greater than 35°, what bear the stress while the tire is rotating with load on it is shifted to the first belt layer 1B and the second belt layer 2B, and excessive stress concentrates on the tire-width direction ends 8 of the first belt layer 1B and the second belt layer 2B. This raises likelihood that: the tire-width direction ends 8 separate from the rubber near the tire-width direction ends 8; and the durability of the heavy duty pneumatic tire 1 decreases.

For these reasons, it is preferable that the cords 9c, 9d included in the third belt layer 3B and the fourth belt layer 4B incline to the tire equatorial plane CL at an angle within the range of 18° to 35°. Such an inclination angle makes it possible to improve the durability of the heavy duty pneumatic tire 1 more.

Moreover, it is preferable that the width W2 of the third belt layer 3B in the tire width direction W be within a range of 75% to 100% of the contact width TW.

In a case where the width W2 of the third belt layer 3B in the tire width direction W is less than 75% of the contact width TW, an area in which the third belt layer 3B is placed is too small. The too small area in which the third belt layer 3B is placed shifts what bear the stress while the tire is rotating with load on it to the first belt layer 1B and the second belt layer 2B, and allows excessive stress to concentrate on the tire-width direction ends 8 of the first belt layer 1B and the second belt layer 2B. This raises likelihood that: the tire-width direction ends 8 separate from the rubber near the tire-width direction ends 8; and the durability of the heavy duty pneumatic tire 1 decreases.

On the other hand, in a case where the width W2 of the third belt layer 3B in the tire width direction W is greater than 100% of the contact width TW, shear strain in the third belt layer 3B is too large, although the third belt layer 3B can effectively resist an input from a protrusion such as a stone when the tire runs over the protrusion while the tire is rotating with load on it. The too large shear strain in the third belt layer 3B raises likelihood that: the tire-width direction ends 8 separate from the rubber near the tire-width direction ends 8; and the durability of the heavy duty pneumatic tire 1 decreases.

For these reasons, it is preferable that the width W2 of the third belt layer 3B in the tire width direction W be within the range of 75% to 100% of the contact width TW. Such a width makes it possible to improve the cut resistance performance while inhibiting a decrease in separation resistance performance.

It should be noted that it is preferable that the width W2 of the third belt layer 3B in the tire width direction W have a sufficient width (a width close to 100% of the contact width TW), because there is likelihood that a protrusion such as a stone is run over by the entirety of the tread contact surface 5a. However, the third belt layer 3B does not necessarily have to cover the contact end portions of the tread contact surface 5a, because when a contact end portion of the tread contact surface 5a runs over a protrusion, there is also likelihood that the protrusion is flung outward in the tire width direction W.

Note that, generally speaking, in the belt portion 7 having the layered structure, each two belt layers next to each other in the tire radial direction R are provided inclining to the tire equatorial surface CL in the opposite directions, respectively. In other words, the general practice is that the multiple belt layers are stacked one on another such that the cords in each two belt layers next to each other in the tire radial direction R intersect each other.

This is because: in no matter what direction the heavy duty pneumatic tire 1 runs over a protrusion such as a stone, such a stacking method makes it possible to inhibit the heavy duty pneumatic tire 1 from being destroyed by an input in the direction; and the stacking method also makes it possible to improve the rigidity of the heavy duty pneumatic tire 1 in the tire circumferential direction C.

In this respect, through earnest studies, the inventors have found that: in a tire including many (five or more) belt layers adjacent to one another in the tire radial direction R, even when one of the belt layers is assigned to specialize in a different performance by not intersecting the other belt layers, the rigidity of the tire in the tire circumferential direction C can be secured using the other belt layers.

In view of this finding, in this embodiment, the belt portion 7 is designed to include: cross-laminated bodies 7A in each of which the extension directions of the cords in the belt layers next to each other in the tire radial direction R intersect each other; and a parallel-laminated body 7B in which the extension directions of the cords in the belt layers next to each other in the tire radial direction R are substantially parallel to each other.

Specifically, the cross-laminated bodies 7A in each of which the extension directions of the cords intersect each other are made by combining: the first belt layer 1B and the second belt layer 2B; the second belt layer 2B and the third belt layer 3B; the third belt layer 3B and the fourth belt layer 4B; and the fifth belt layer 5B and the sixth belt layer 6B.

On the other hand, the parallel-laminated body 7B in which the extension directions of the cords are substantially parallel to each other is made by combining the fourth belt layer 4B and the fifth belt layer 5B.

In this respect, the extension directions of the cords being substantially parallel to each other is defined as a state where, in a view from above the tread contact surface 5a, an area where the belt layers under discussion are disposed next to each other in the tire radial direction R, and five or less cords embedded in one belt layer intersect each cord embedded in the other belt layer.

In other words, in this embodiment, the fourth belt layer 4B and the fifth belt layer 5B are stacked in the tire radial direction R such that five or less of the multiple cords 9d embedded in the fourth belt layer 4B intersect each cord 9e embedded in the fifth belt layer 5B.

In this embodiment, n = 6 where n denotes the total number of the belt layers included in the belt portion 7. In addition, i = 4 where i denotes the number of the inner-located belt layer among the belt layers 4B, 5B of the parallel-laminated body 7B when the belt layers 1B to 6B included in the belt portion 7 are counted from an inner side in the tire radial direction R, since in this embodiment, the fourth belt layer 4B is the inner-located belt layer of the parallel-laminated body 7B in the tire radial direction R.

For this reason, in this embodiment, the parallel-laminated body 7B is provided in the belt portion 7 in a way that satisfies a relationship expressed with i ≥ n/2. In other words, the parallel-laminated body 7B is provided in the outer-side part in the tire radial direction R of the belt portion 7 made by laminating the multiple stacking layers.

Furthermore, in this embodiment, as discussed above, the cord 9d with the largest cord diameter is embedded in the fourth belt layer 4B. Thus, the fourth belt layer 4B in the parallel-laminated body 7B is the thickest belt layer including the cord which is larger in cord diameter than any other cords included in the other belt layers. On the other hand, the cord 9e with the smallest cord diameter is embedded in the fifth belt layer 5B. Thus, the fifth belt layer 5B is the thinnest belt layer.

Accordingly, at least one belt layer (the fourth belt layer 4B) of the belt layers (the fourth belt layer 4B and the fifth belt layer 5B) in the parallel-laminated body 7B is the thickest belt layer including the cord which is larger in cord diameter than any other cords included in the other belt layers. Meanwhile, the belt layer (the fifth belt layer 5B) which is not the thickest belt layer (the fourth belt layer 4B) of the belt layers (the fourth belt layer 4B and the fifth belt layer 5B) in the parallel-laminated body 7B is the thinnest belt layer (the belt layer which includes the cord thinner than the cord included in the thickest belt layer).

In this respect, as discussed above, the fourth belt layer 4B is located on the inner side of the tire in the tire radial direction R than the fifth belt layer 5b. Thus, the belt layer (the fourth belt layer 4B) which is located on the inner side of the tire in the tire radial direction R of the belt layers in the parallel-laminated body 7B of this embodiment is the thickest belt layer in the tire, whereas the belt layer (the fifth belt layer 5B) which is located on the outer side of the tire in the tire radial direction R of the belt layers in the parallel-laminated body 7B thereof is the thinnest belt layer (the belt layer which includes the cord thinner than that included in the thickest belt layer) in the tire.

In addition, the belt layer (the fifth belt layer 5B) which is the wider in the tire width direction W of the belt layers (the fourth belt layer 4B and the fifth belt layer 5B) in the parallel-laminated body 7B has the width W3 in the tire width direction W which is substantially equal to the width W2 in the tire width direction W of the third belt layer 3B, as illustrated in Fig. 1 and Fig. 2.

Accordingly, the width W3 in the tire width direction W of the belt layer (the fifth belt layer 5B) which is the wider in the tire width direction W of the belt layers (the fourth belt layer 4B and the fifth belt layer 5B) in the parallel-laminated body 7B is also 75% or greater but 100% or less, of the contact width TW of the tread portion 5.

In this respect, the width W3 in the tire width direction W is the width in the tire width direction W of the belt layer which is the wider of the multiple (two) belt layers (the fourth belt layer 4B and the fifth belt layer 5B in the embodiment) included in the parallel-laminated body 7B, when the widths of the belt layers are different from each other. For this reason, in the case where like in this embodiment, the fourth belt layer 4B and the fifth belt layer 5B jointly form the parallel-laminated body 7B as well as the fifth belt layer 5B is wider than the fourth belt layer 4B, the width in the tire width direction W of the fifth belt layer 5B is the width W3 in the tire width direction W of the belt layer which is the wider in the tire width direction W of the two belt layers in the parallel-laminated body 7B.

It is preferable that like the above-discussed third belt layer 3B, the width W3 in the tire width direction W of the fifth belt layer 5B have a sufficient width (a width close to 100% of the contact width TW), because there is likelihood that a protrusion such as a stone is run over by the entirety of the tread contact surface 5a. Nevertheless, when a contact end portion of the tread contact surface 5a runs over a protrusion, there is also likelihood that the protrusion is flung outward in the tire width direction W. For this reason, the fifth belt layer 5B does not necessarily have to cover the contact end portions of the tread contact surface 5a. With these taken into consideration, it is preferable that the width W3 in the tire width direction W of the fifth belt layer 5B be also 75% or greater but 100% or less, of the contact width TW of the tread portion 5.

As discussed above, the heavy duty pneumatic tire 1 includes at least one carcass 6 which toroidally extends between the bead cores 2 respectively embedded in the pair of bead portions 3.

The heavy duty pneumatic tire 1 further includes the belt portion 7 outside the carcass 6 in the tire radial direction R, and the belt portion 7 is formed by stacking at least five belt layers (the first to six belt layers 1B to 6B) one on another in the tire radial direction R. The belt layers are each formed by covering the multiple cords 9a to 9f with rubber.

The belt portion 7 includes the cross-laminated bodies 7A in each of which the extension directions of the cords in the belt layers next to each other in the tire radial direction R intersect each other; and the parallel-laminated body 7B in which the extension directions of the cords in the belt layers next to each other in the tire radial direction R are substantially parallel to each other.

Since the parallel-laminated body 7B is formed such that like this, the extension directions of the cords in the belt layers next to each other in the tire radial direction R are substantially parallel to each other, it is possible to obtain substantially the same cut resistance performance as when the density in which the cords are embedded in each of the belt layers is doubled. In addition, since the density in which the cords are embedded in the one belt layer need not be made large, the separation resistance performance also can be secured. Accordingly, this embodiment can further improve the achievement of both the cut resistance performance and the belt separation resistance performance. In this case, the rigidity in the tire circumferential direction C can be sufficiently secured by the existence of the cross-laminated bodies 7A.

Furthermore, the parallel-laminated body 7B is provided in the belt portion 7 in the way that satisfies the relationship expressed with i ≥ n/2 (4 ≥ 3) where: n denotes the total number of the belt layers included in the belt portion 7 (n = 6 in this embodiment); and i denotes the number of the inner-located belt layer (the fourth belt layer 4B), which is located on the inner side in the tire radial direction R among the belt layers 4B, 5B of the parallel-laminated body 7B, when the belt layers 1B to 6B included in the belt portion 7 are counted from an inner side in the tire radial direction R (i = 4 in this embodiment). In other words, the parallel-laminated body 7B is provided in the outer-side part (the outer-side part beyond the middle) in the tire radial direction R of the belt portion 7 made by laminating the multiple stacking layers.

This makes it possible for the heavy duty pneumatic tire 1 to stop a protrusion such as a stone by as outer layers as possible, and accordingly to improve the durability of the heavy duty pneumatic tire 1 much more.

Moreover, in this embodiment, at least one belt layer (the fourth belt layer 4B) of the belt layers (the fourth belt layer 4B and the fifth belt layer 5B) of the parallel-laminated body 7B is the thickest layer including the cord which is larger in cord diameter than any other cords included in the other belt layers.

This makes it possible to improve the cut resistance performance against a relatively large protrusion.

Besides, the belt layer (the fourth belt layer 4B) which is located on the inner side of the tire in the tire radial direction R of the belt layers in the parallel-laminated body 7B is the thickest belt layer in the tire, whereas the belt layer (the fifth belt layer 5B) which is located on the outer side of the tire in the tire radial direction R of the belt layers in the parallel-laminated body 7B is the thinnest belt layer (the belt layer which includes the cord thinner than that included in the thickest belt layer) in the tire.

This makes it possible to more effectively stop a smaller protrusion by the outer belt layer in the tire radial direction R (the fifth belt layer 5B), since the outer belt layer in the tire radial direction R (the fifth belt layer 5B) is formed using the cord 9e with the smaller cord diameter. On the other hand, it is possible to more effectively stop a larger protrusion by the inner belt layer in the tire radial direction R (the fourth belt layer 4B). Accordingly, it is possible to assign the function of stopping a larger protrusion from entering the inside of the tire and the function of stopping a smaller protrusion from entering the inside of the tire, respectively, to the belt layers of the parallel-laminated body 7B.

Moreover, the width W3 in the tire width direction W of the belt layer (the fifth belt layer) which is the wider in the tire width direction W of the belt layers of the parallel-laminated body 7B is 75% or greater but 100% or less, of the contact width TW of the tread portion 5.

This makes it possible to more effectively stop a protrusion from entering the inside of the tire.

### (Second Embodiment)

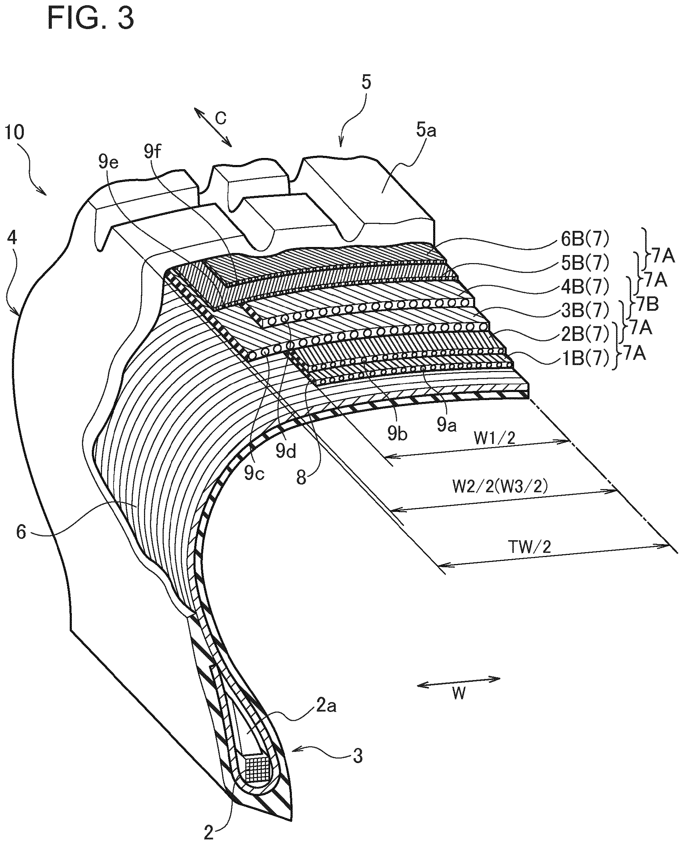

A heavy duty pneumatic tire 10 of this embodiment has basically the same configuration as the heavy duty pneumatic tire 1 shown in the first embodiment. In other words, as illustrated in Fig. 3, the heavy duty pneumatic tire 10 of this embodiment includes: the bead portion 3; the sidewall portion 4 continuing from the bead portion 3; and the tread portion 5 continuing from the sidewall portion 4.

The heavy duty pneumatic tire 10 further includes at least one carcass 6 which toroidally extends between the bead cores 2 respectively embedded in the pair of bead portions 3.

The belt portion 7 is provided outside the carcass 6 in the tire radial direction R. The belt portion 7 includes at least five belt layers which are stacked one on another in the tire radial direction R, and each belt layer is made by covering multiple cords with rubber. This belt portion 7 is formed by stacking the at least five belt layers (the first to sixth belt layers 1B to 6B) one on another in the tire radial direction R, and each belt layer extends in the tire circumferential direction C. The belt layers (the first to sixth belt layers 1B to 6B) are formed by covering multiple cords 9a, multiple cords 9b, multiple cords 9c, multiple cords 9d, multiple cords 9e and multiple cords 9f with rubber, respectively.

In this embodiment, too, as discussed above, the belt portions 7 is formed by stacking six belt layers, namely, the first belt layer 1B, the second belt layer 2B, the third belt layer 3B, the fourth belt layer 4B, the fifth belt layer 5B and the sixth belt layer 6B, in this order from the inside to the outside in the tire radial direction R.

Furthermore, the cords 9c, 9d with the largest cord diameter are embedded in the third belt layer 3B and the fourth belt layer 4B, respectively. Thus, the third belt layer 3B and the fourth belt layer 4B are the thickest belt layers including the cords which are larger in cord diameter than any other cords included in the other belt layers.

Moreover, the cords 9e, 9f with the smallest cord diameter are embedded in the fifth belt layer 5B and the sixth belt layer 6B. Thus, the fifth belt layer 5B and the sixth belt layer 6B are the thinnest belt layers.

Besides, the cords 9a, 9b with the medium cord diameter are embedded in the first belt layer 1B and the second belt layer 2B. Thus, the first belt layer 1B and the second belt layer 2B are the medium thick belt layers.

The belt portion 7 further includes: cross-laminated bodies 7A in each of which the extension directions of the cords in the belt layers next to each other in the tire radial direction R intersect each other; and a parallel-laminated body 7B in which the extension directions of the cords in the belt layers next to each other in the tire radial direction R are substantially parallel to each other.

In this respect, the heavy duty pneumatic tire 10 of this embodiment is different from the heavy duty pneumatic tire 1 shown in the first embodiment in that the belt layers in the parallel-laminated body 7B are made of the thickest belt layers only.

Specifically, the cross-laminated bodies 7A in each of which the extension directions of the cords intersect each other are made by combining: the first belt layer 1B and the second belt layer 2B; the second belt layer 2B and the third belt layer 3B; the fourth belt layer 4B and the fifth belt layer 5B; and the fifth belt layer 5B and the sixth belt layer 6B.

On the other hand, the parallel-laminated body 7B in which the extension directions of the cords are substantially parallel to each other is made by combining the third belt layer 3B and the fourth belt layer 4B.

In this case, a relationship expressed with i ≥ n/2 (3 ≥ 3) is satisfied where: n denotes the total number of the belt layers included in the belt portion 7 (n = 6 in this embodiment); and i denotes the number of the inner-located belt layer (the third belt layer 3B), which is located on the inner side in the tire radial direction R among the belt layers 3B, 4B of the parallel-laminated body 7B, when the belt layers 1B to 6B included in the belt portion 7 are counted from an inner side in the tire radial direction R (i = 3 in this embodiment).

In addition, the two belt layers included in the parallel-laminated body 7B are made of the third belt layer 3B and the fourth belt layer 4B which both are the thickest belt layers. Thus, both of the two belt layers included in the parallel-laminated body 2B are the thickest belt layers.

Furthermore, the width W3 in the tire width direction W of the belt layer which is the wider in the tire width direction W of the two belt layers of the parallel-laminated body 7B is 75% or greater but 100% or less, of the contact width TW of the tread portion 5.

In this respect, the width W3 in the tire width direction W is the width in the tire width direction W of the belt layer which is the wider of the multiple (two) belt layers (the third belt layer 3B and the fourth belt layer 4B in the embodiment) included in the parallel-laminated body 7B, when the widths of the belt layers are different from each other. For this reason, in the case where like in this embodiment, the third belt layer 3B and the fourth belt layer 4B jointly form the parallel-laminated body 7B as well as the third belt layer 3B is wider than the fourth belt layer 4B, the width in the tire width direction W of the third belt layer 3B is the width W3 in the tire width direction W of the belt layer which is the wider in the tire width direction W of the two belt layers in the parallel-laminated body 7B.

As discussed above, in this embodiment, the width W3 in the tire width direction W of the belt layer which is the wider in the tire width direction W of the belt layers in the parallel-laminated body 7B coincides with the width W2 in the tire width direction W of the third belt layer 3B.

The above-discussed embodiment can bring about the same working and effect as the first embodiment.

Furthermore, in this embodiment, the belt layers in the parallel-laminated body 7B are made of the thickest belt layers only. This makes it possible to obtain substantially the same cut resistance performance as when the density in which the cords are embedded in each of the thickest belt layers capable of effectively stopping a large protrusion is doubled. Accordingly, the cut resistance performance can be improved further.

### (Third Embodiment)

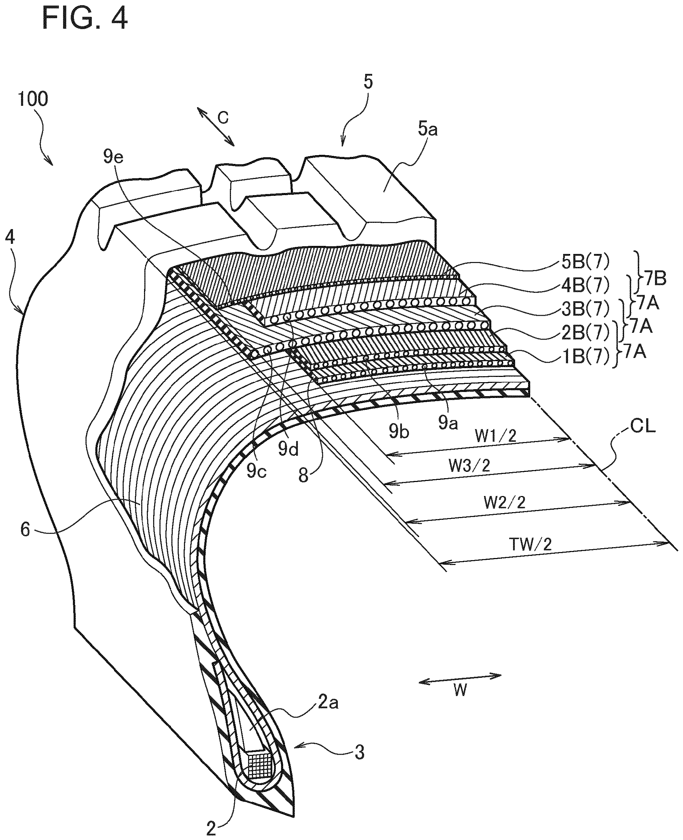

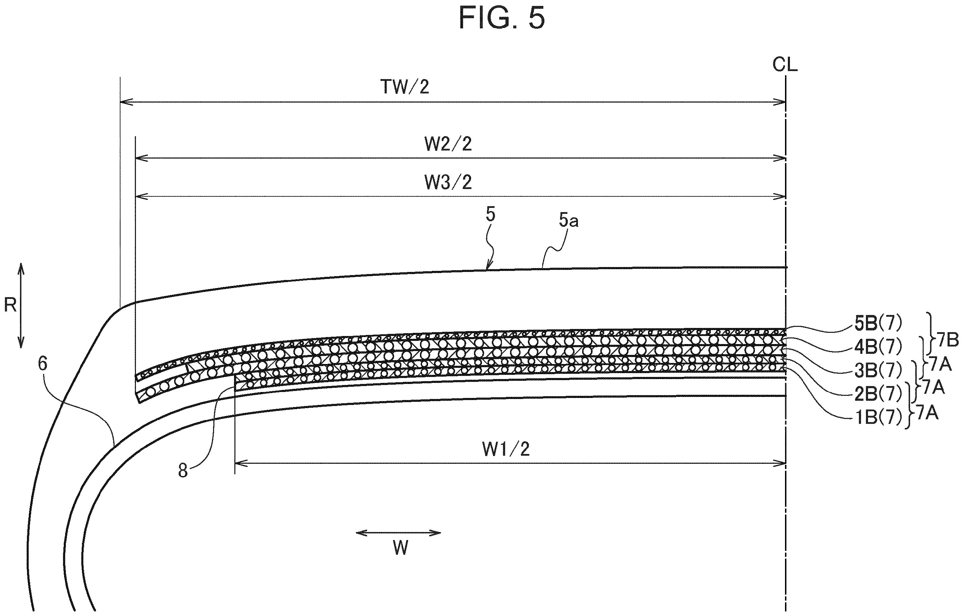

A heavy duty pneumatic tire 100 of this embodiment has basically the same configuration as the heavy duty pneumatic tire 1 shown in the first embodiment. In other words, as illustrated in Fig. 4 and Fig. 5, the heavy duty pneumatic tire 100 of this embodiment includes: the bead portion 3; the sidewall portion 4 continuing from the bead portion 3; and the tread portion 5 continuing from the sidewall portion 4.

The heavy duty pneumatic tire 100 further includes at least one carcass 6 which toroidally extends between the bead cores 2 respectively embedded in the pair of bead portions 3.

The belt portion 7 is provided outside the carcass 6 in the tire radial direction R. The belt portion 7 includes at least five belt layers which are stacked one on another in the tire radial direction R, and each belt layer is made by covering multiple cords with rubber.

In this respect, the heavy duty pneumatic tire 100 of this embodiment is different from the heavy duty pneumatic tire 1 shown in the first embodiment in that the belt portion 7 is made from five belt layers (at least five belt layers).

Specifically, the belt portion 7 is formed by stacking the five belt layers (first to fifth belt layers 1B to 5B) one on another in the tire radial direction R, and each belt layer extends in the tire circumferential direction C. In addition, the belt layers (first to fifth belt layers 1B to 5B) are formed by covering multiple cords 9a, multiple cords 9b, multiple cords 9c, multiple cords 9d and multiple cords 9e with rubber, respectively.

In this embodiment, as discussed above, the belt portions 7 is formed by stacking five belt layers, namely, the first belt layer 1B, the second belt layer 2B, the third belt layer 3B, the fourth belt layer 4B and the fifth belt layer 5B, in this order from the inside to the outside in the tire radial direction R.

Furthermore, the cords 9c, 9d with the largest cord diameter are embedded in the third belt layer 3B and the fourth belt layer 4B, respectively. Thus, the third belt layer 3B and the fourth belt layer 4B are the thickest belt layers.

Moreover, the cords 9e with the smallest cord diameter are embedded in the fifth belt layer 5B. Thus, the fifth belt layer 5B is the thinnest belt layer.

Besides, the cords 9a, 9b with the medium cord diameter are embedded in the first belt layer 1B and the second belt layer 2B. Thus, the first belt layer 1B and the second belt layer 2B are the medium thick belt layers.

The belt portion 7 further includes: cross-laminated bodies 7A in each of which the extension directions of the cords in the belt layers next to each other in the tire radial direction R intersect each other; and a parallel-laminated body 7B in which the extension directions of the cords in the belt layers next to each other in the tire radial direction R are substantially parallel to each other.

Specifically, the cross-laminated bodies 7A in each of which the extension directions of the cords intersect each other are made by combining: the first belt layer 1B and the second belt layer 2B; the second belt layer 2B and the third belt layer 3B; and the third belt layer 3B and the fourth belt layer 4B.

On the other hand, the parallel-laminated body 7B in which the extension directions of the cords are substantially parallel to each other is made by combining the fourth belt layer 4B and the fifth belt layer 5B.

In this case, a relationship expressed with i ≥ n/2 (4 ≥ 2.5) is satisfied where: n denotes the total number of the belt layers included in the belt portion 7 (n = 5 in this embodiment); and i denotes the number of the inner-located belt layer (the fourth belt layer 4B), which is located on the inner side in the tire radial direction R among the belt layers 4B, 5B of the parallel-laminated body 7B, when the belt layers 1B to 5B included in the belt portion 7 are counted from an inner side in the tire radial direction R (i = 4 in this embodiment).

In addition, in this embodiment, as discussed above, the cord 9d with the largest cord diameter is embedded in the fourth belt layer 4B, and the fourth belt layer 4B is the thickest belt layer including the cord which is larger in cord diameter than any other cords included in the other belt layers. On the other hand, the cord 9e with the smallest cord diameter is embedded in the fifth belt layer 5B, and the fifth belt layer 5B is the thinnest belt layer.

Thus, at least one belt layer (the fourth belt layer 4B) of the two belt layers (the fourth belt layer 4B and the fifth belt layer 5B) in the parallel-laminated body 7B is the thickest belt layer. Meanwhile, the belt layer (the fifth belt layer 5B) which is not the thickest belt layer (the fourth belt layer 4B) of the two belt layers (the fourth belt layer 4B and the fifth belt layer 5B) in the parallel-laminated body 7B is the thinnest belt layer (the belt layer which includes the cord thinner than the cord included in the thickest belt layer).

In this respect, in this embodiment, too, the fourth belt layer 4B is located on the inner side of the tire in the tire radial direction R than the fifth belt layer 5b. Thus, the belt layer (the fourth belt layer 4B) which is located on the inner side of the tire in the tire radial direction R of the belt layers in the parallel-laminated body 7B of this embodiment is the thickest belt layer in the tire, whereas the belt layer (the fifth belt layer 5B) which is located on the outer side of the tire in the tire radial direction R of the belt layers in the parallel-laminated body 7B thereof is the thinnest belt layer (the belt layer which includes the cord thinner than that included in the thickest belt layer) in the tire.

In addition, the belt layer (the fifth belt layer 5B) which is the wider in the tire width direction W of the belt layers (the fourth belt layer 4B and the fifth belt layer 5B) in the parallel-laminated body 7B has the width W3 in the tire width direction W which is substantially equal to the width W2 in the tire width direction W of the third belt layer 3B, as illustrated in Fig. 4 and Fig. 5.

Accordingly, the width W3 in the tire width direction W of the belt layer (the fifth belt layer 5B) which is the wider in the tire width direction W of the two belt layers (the fourth belt layer 4B and the fifth belt layer 5B) in the parallel-laminated body 7B is also 75% or greater but 100% or less, of the contact width TW of the tread portion 5.

In this respect, the width W3 in the tire width direction W is the width in the tire width direction W of the belt layer which is the wider of the multiple (two) belt layers (the fourth belt layer 4B and the fifth belt layer 5B in the embodiment) included in the parallel-laminated body 7B, when the widths of the belt layers are different from each other. For this reason, in the case where like in this embodiment, the fourth belt layer 4B and the fifth belt layer 5B jointly form the parallel-laminated body 7B as well as the fifth belt layer 5B is wider than the fourth belt layer 4B, the width in the tire width direction W of the fifth belt layer 5B is the width W3 in the tire width direction W of the belt layer which is the wider in the tire width direction W of the belt layers in the parallel-laminated body 7B.

The above-discussed embodiment can bring about the same working and effect as the first embodiment.

It should be noted that: the foregoing embodiments only show examples of the present invention; and the configurations of the respective embodiments may be combined together, and may be variously modified, as long as the combinations and modifications do not depart from the gist of the present invention

For example, although each foregoing embodiment shows the example in which the cords included in the belt layers are cords each extending in a straight line, the cords may be cords extending in a series of waves or zigzags.

Furthermore, although the first and second embodiments show the example in which the belt portion 7 is formed by stacking the six belt layers one on another as well as the parallel-laminated body 7B is provided in the belt portion 7 in the way that satisfies the relationship expressed with i ≥ n/2, the parallel-laminated body 7B in the belt portion 7 formed by stacking the six belt layers one on another may be formed from the fifth belt layer 5B and the sixth belt layer 6B. The parallel-laminated body 7B formed from the fifth belt layer 5B and the sixth belt layer 6B in this manner also satisfies the relationship expressed with i ≥ n/2.

Furthermore, although the third embodiment shows the example in which the belt portion 7 is formed by stacking the five belt layers one on another as well as the parallel-laminated body 7B is provided in the belt portion 7 in the way that satisfies the relationship expressed with i ≥ n/2, the parallel-laminated body 7B in the belt portion 7 formed by stacking the five belt layers one on another may be formed from the third belt layer 3B and the fourth belt layer 4B. The parallel-laminated body 7B formed from the third belt layer 3B and the fourth belt layer 4B in this manner also satisfies the relationship expressed with i ≥ n/2.

Moreover, the number of belt layers included in the belt portion 7 may be seven or more. However, when the number of belt layers is seven or more, the tread portion is too thick, and there is likelihood that the heat radiation performance is worse. For this reason, it is preferable that the number of belt layers included in the belt portion 7 be five or six.

Besides, the parallel-laminated body 7B may be formed from three or more belt layers. However, in a case where the parallel-laminated body 7B is formed from three or more belt layers while the number of belt layers included in the belt portion 7 is five or six, there is likelihood that the rigidity in the tire circumferential direction C is lower. For this reason, it is preferable that only the two belt layers next to each other in the tire radial direction R be substantially parallel to each other.

Next, descriptions will be provided for examples to which the present invention is applied. It should be noted that the present invention is not limited to the following examples.

### EXAMPLES

The following measurements were performed in order to check the effects of the heavy duty pneumatic tires of the present invention.

To begin with, a heavy duty pneumatic tire (Conventional Example Tire 1) including a conventional belt portion, comparative example tires (Comparative Example Tires 1, 2) for which the cord diameter or the embedment density was changed from that for the conventional example tire 1, and heavy duty pneumatic tires (Example Tires 1, 2) each including a belt portion to which the present invention was applied were experimentally produced.

The tire size of the heavy duty pneumatic tires prepared for this experiment was 53/80R63.

In addition, the number of belts in the belt portion was six (in Table. 1, the belts are denoted by reference signs 1B to 6B from the inside to the outside in the tire radial direction R).

Furthermore, the rim size of the rims on which the respective heavy duty pneumatic tires were mounted was 36.00 × 5.0.

Moreover, the cord diameter of the cord and the cord embedment density in each belt are represented by their index numbers which are calculated compared with the respective base values of 100 corresponding to the cord diameter of the cord and the cord embedment density in the belt layer 4B in Conventional Example Tire 1.

For each experimental tire, the durability was evaluated from the following viewpoints by use of a tire wheel obtained by mounting the experimental tire on a rim in the size of 36.00 × 5.0.

### <Evaluation on Cut Resistance Performance against Sharp Protrusion Input>

For each of Conventional Example Tire 1, Comparative Example Tires 1, 2, and Example Tires 1, 2, 10 tires were prepared by being installed on the rear position using the normal inner pressure and the normal rim defined by TRA (The Tire and Rim Association, Inc.), and were made to run under the same use conditions (travelling route, travelling speed, and tire load of 80 t). Thereby, the travelling time length was measured until five of the 10 tires became no longer usable due to tread cuts caused by sharp protrusion inputs. The performances of Conventional Example Tire 1, Comparative Example Tires 1, 2, and Example Tires 1, 2 are evaluated using an index number.

The evaluation results are shown in Table 1. Incidentally, the numerical values in the table are index numbers compared with a base value of 100 corresponding to the travelling time length of Conventional Example Tire 1. A larger numerical value means a longer travelling time length, and a better result.

### <Evaluation on Separation Resistance Performance>

Each experimental tire for Conventional Example Tire 1, Comparative Example Tires 1, 2, and Example Tires 1, 2 was evaluated by checking whether the shape of the tread portion changed due to separation between the belt layers 1B, 2B and the rubber near the belt layers 1B, 2B for 240 hours using photographing equipment while rotating the tire wheel, placed on a drum testing machine with a drum diameter of 7 m, at a rotational speed associated with a travelling speed (8 km/h) under a condition in which 150% load (1223.8 kN) based on the TRA (the Tire and Rim Association, Inc.) Yearbook was applied to the tire wheel.

The evaluation results are shown in Table 1. Incidentally, the performances of Conventional Example Tire 1, Comparative Example Tires 1, 2, and Example Tires 1, 2 are evaluated using an index number in a way that: 100 represents no change in the shape of the tread portion at a time when the 240 hours passed; and in a case where the shape thereof changed before the 240 hours, a time length which had passed before the change occurred is calculated as a value relative to 100. In this respect, within an upper limit of 100, a larger numerical value means that the tire has a better durability. Tires represented by a numerical value equal to or greater than 85 (equivalent to 204 hours or more) are evaluated to have a sufficiently improved durability against flat road surfaces, and accordingly to be marketable.

**[Table 1]**

| | Conventional Example 1 | Comparative Example 1 | Comparative Example 2 | Example 1 | Example 2 |
|---|---|---|---|---|---|
| 1B Angle | R5 | R5 | R5 | R5 | R5 |
| 2B Angle | L5 | L5 | L5 | L5 | L5 |
| 3B Angle | R18 | R18 | R18 | R18 | R18 |
| 4B Angle | L18 | L18 | L18 | L18 | L18 |
| 5B Angle | R18 | R18 | R18 | L18 | L18 |
| 6B Angle | L18 | L18 | L18 | R18 | R18 |
| 1B Embedment | 240 | 240 | 240 | 240 | 240 |
| 2B Embedment | 240 | 240 | 240 | 240 | 240 |
| 3B Embedment | 100 | 100 | 100 | 100 | 100 |
| 4B Embedment | 100 | 150 | 100 | 100 | 100 |
| 5B Embedment | 280 | 280 | 280 | 280 | 280 |
| 6B Embedment | 280 | 280 | 280 | 280 | 280 |
| 1B Cord Diameter | 69 | 69 | 69 | 69 | 69 |
| 2B Cord Diameter | 69 | 69 | 69 | 69 | 69 |
| 3B Cord Diameter | 100 | 100 | 100 | 100 | 100 |
| 4B Cord Diameter | 100 | 100 | 122 | 100 | 100 |
| 5B Cord Diameter | 35 | 35 | 35 | 35 | 35 |
| 6B Cord Diameter | 35 | 35 | 35 | 35 | 35 |
| 1B Width/Contact Width | 0.47 | 0.47 | 0.47 | 0.47 | 0.47 |
| 2B Width/Contact Width | 0.43 | 0.43 | 0.43 | 0.43 | 0.43 |
| 3B Width/Contact Width | 0.76 | 0.76 | 0.76 | 0.76 | 0.76 |
| 4B Width/Contact Width | 0.67 | 0.67 | 0.67 | 0.67 | 0.67 |
| 5B Width/Contact Width | 0.87 | 0.87 | 0.87 | 0.87 | 0.87 |
| 6B Width/Contact Width | 0.75 | 0.75 | 0.75 | 0.75 | 0.75 |
| Cut Resistance Performance | 100 | 110 | 110 | 120 | 130 |
| Separation Resistance Performance | 100 | 70 | 80 | 100 | 95 |

Comparative Example 1 represents an example with a changed cord embedment density, and Comparative Example 2 represents an example with a changed cord diameter. As indicated by Table 1, it was confirmed that although the cut resistance performances of both Comparative Examples 1, 2 were improved, the separation resistance performances thereof were worsened. Incidentally, although the examples in which the cord embedment density or the cord diameter in the belt layer 4B was changed are shown here, a similar tendency was observed when the cord embedment density or the cord diameter in any other layers was changed.

Example 1 represents an example where: the outer-located belt layer of the parallel-laminated body in the tire radial direction was a belt layer in which a cord with a smaller cord diameter was embedded with a large embedment density; and the inner-located belt layer of the parallel-laminated body in the tire radial direction was a belt layer in which a cord with a larger cord diameter was embedded with a large embedment density. As indicated by Table 1, it was confirmed that in Example 1, the separation resistance performance was kept at substantially the same level, and concurrently the cut resistance performance was improved.

Meanwhile, Example 2 represents an example where the two layers of the parallel-laminated body were each made from a belt layer in which a cord with the largest cord diameter was embedded. As indicated by Table 1, it was confirmed that in Example 2, the separation resistance performance slightly worsened, but the cut resistance performance was improved to a large extent. Incidentally, the tire of Example 2 is also marketable, since the evaluation of the separation resistance performance was represented by a numerical value of 95 (85 or more) although the separation resistance performance became slightly worse.

As discussed above, it was confirmed that in the tires of Examples 1, 2, the achievement of both the cut resistance performance and the belt separation resistance performance is further improved.

Next, the following measurements were performed in order to check the effects of heavy duty pneumatic tires in each of which the number of belts included in the belt portion was five (in Table 2, the belts are denoted by reference signs 1B to 5B from the inside to the outside in the tire radial direction R).

Specifically, a heavy duty pneumatic tire (Conventional Example Tire 2) including a conventional belt portion, and a heavy duty pneumatic tire (Example Tire 3) including a belt portion to which the present invention was applied were experimentally produced.

The tire size of the heavy duty pneumatic tires prepared for this experiment was also 53/80R63.

Furthermore, the rim size of the rims on which the respective heavy duty pneumatic tires were mounted was also 36.00 × 5.0.

Moreover, the cord diameter of the cord and the cord embedment density in each belt are represented by their index numbers which are calculated compared with the respective base values of 100 corresponding to the cord diameter of the cord and the cord embedment density in the belt layer 4B in Conventional Example Tire 2.

For each experimental tire, the durability was evaluated from the following viewpoints by use of a tire wheel obtained by mounting the experimental tire on a rim in the size of 36.00 × 5.0.

Specifically, the <Evaluation on Cut Resistance Performance against Sharp Protrusion Input> and the <Evaluation on Separation Resistance Performance> were performed using the same methods as were used for the heavy duty pneumatic tires in each of which the number of belts included in the belt portion was six.

The evaluation results are shown in Table 2. Table 2 can be read in the same way as Table 1.

**[Table 2]**

| | Conventional Example 2 | Example 3 |
|---|---|---|
| 1B Angle | R5 | R5 |
| 2B Angle | L5 | L5 |
| 3B Angle | R18 | R18 |
| 4B Angle | L18 | L18 |
| 5B Angle | R18 | L18 |
| 1B Embedment | 240 | 240 |
| 2B Embedment | 240 | 240 |
| 3B Embedment | 100 | 100 |
| 4B Embedment | 100 | 100 |
| 5B Embedment | 280 | 200 |
| 1B Cord Diameter | 69 | 69 |
| 2B Cord Diameter | 69 | 69 |
| 3B Cord Diameter | 100 | 100 |
| 4B Cord Diameter | 100 | 100 |
| 5B Cord Diameter | 35 | 52 |
| 1B Width/Contact Width | 0.47 | 0.5 |
| 2B Width/Contact Width | 0.43 | 0.46 |
| 3B Width/Contact Width | 0.76 | 0.8 |
| 4B Width/Contact Width | 0.67 | 0.71 |
| 5B Width/Contact Width | 0.87 | 0.89 |
| Cut Resistance Performance | 100 | 122 |
| Separation Resistance Performance | 100 | 97 |

Example 3 represents an example where: the outer-located belt layer of the parallel-laminated body in the tire radial direction was a belt layer in which a cord with a smaller cord diameter was embedded with a large embedment density; and the inner-located belt layer of the parallel-laminated body in the tire radial direction was a belt layer in which a cord with a larger cord diameter was embedded with a large embedment density. As indicated by Table 2, it was confirmed that in Example 3, the separation resistance performance slightly worsened, but the cut resistance performance was improved to a large extent. Incidentally, the tire of Example 3 is also marketable, since the evaluation of the separation resistance performance was represented by a numerical value of 97 (85 or more) although the separation resistance performance became slightly worse.

As discussed above, it was confirmed that in the tire of Example 3, the achievement of both the cut resistance performance and the belt separation resistance performance is further improved.

This application claims the priority based on Japanese Patent Application No. 2015-045781 filed on March 9, 2015, the entire contents of which are incorporated by reference herein.

### [INDUSTRIAL APPLICABILITY]

The present invention can makes it possible to obtain the heavy duty pneumatic tire capable of further improving the achievement of both the cut resistance performance and the belt separation resistance performance.

### [REFERENCE SIGNS LIST]

1, 10, 100 heavy duty pneumatic tire
5 tread portion
7 belt portion
7A cross-laminated body
7B parallel-laminated body
1B to 6B belt layer
3B, 4B thickest belt layer
9a to 9f cord
C tire circumferential direction
R tire radial direction
W tire width direction
W3 width in a tire width direction of a belt layer which is the wider in the tire width direction of the parallel-laminated body
TW contact width

## Claims

1. A heavy duty pneumatic tire, comprising:
at least one carcass which toroidally extends between bead cores embedded respectively in a pair of bead portions; and
a belt portion which is arranged outside the carcass in a tire radial direction, and which includes at least five belt layers stacked one on another in the tire radial direction, each belt layer made by covering a plurality of cords with rubber, wherein
the belt portion includes
a cross-laminated body in which extension directions of the cords in the belt layers next to each other in the tire radial direction intersect each other, and
a parallel-laminated body in which extension directions of the cords in the belt layers next to each other in the tire radial direction are substantially parallel to each other, and
the parallel-laminated body is provided in the belt portion in a way that satisfies a relationship expressed with i ≥ n/2 where
n denotes a total number of the belt layers included in the belt portion, and
i denotes the number of a belt layer, which is located on the inner side in the tire radial direction among the belt layers of the parallel-laminated body, when the belt layers included in the belt portion are counted from an inner side in the tire radial direction.

2. The heavy duty pneumatic tire according to claim 1, wherein
the belt portion includes a plurality of belt layers having cord diameters different from each other, and
at least one of the belt layers in the parallel-laminated body is the thickest belt layer , the cord in the thickest belt layer being larger in cord diameter than any other cords in the other belt layers.

3. The heavy duty pneumatic tire according to claim 2, wherein
the belt layers in the parallel-laminated body include the thickest belt layers only.

4. The heavy duty pneumatic tire according to claim 2, wherein
of the belt layers in the parallel-laminated body, one which is located on an inner side of the heavy duty pneumatic tire in the tire radial direction is the thickest belt layer, and the other which is located on an outer side of the heavy duty pneumatic tire in the tire radial direction is a belt layer including a cord which is smaller in cord diameter than the cord included in the thickest belt layer.

5. The heavy duty pneumatic tire according to any one of claims 1 to 4, wherein
a width in a tire width direction of a belt layer which is the wider in the tire width direction of the belt layers in the parallel-laminated body is 75% or greater but 100% or less, of a contact width of a tread.
